# FASCICULE DE BREVET EUROPEEN

(11) **EP 1 873 385 B1**
(45) Date de publication et mention de la délivrance du brevet: **12.08.2009**
(21) Numéro de dépôt: 07110966.4
(22) Date de dépôt: 25.06.2007
(51) Int. Cl.: F02K 1/04

(54) **Cone d'échappement pour la canalisation d'une veine de gaz à l'aval d'une turbine**
Abgasendstück zur Führung eines Gasstroms stromab einer Turbine
Exhaust cone for channeling a gas stream downstream of a turbine

(30) Priorité: 26.06.2006 FR 0652641
(43) Date de publication de la demande: 02.01.2008
(73) Titulaire: SNECMA, 75015 Paris (FR)
(72) Inventeur: Blanchard, Stéphane, 77590 Chartrettes (FR); Cameriano, Laurent, 77210 Avon (FR); Dakowski, Mathieu, 94370 Sucy En Brie (FR); Page, Alain, 91230 Montgeron (FR)
(74) Mandataire: Barbin le Bourhis, Joël

(56) Documents cités:
- EP-A1- 0 080 404
- EP-A1- 0 316 233
- EP-A1- 1 557 553
- WO-A-20/06060006
- GB-A- 739 300
- US-A- 5 230 214

## Description

L'invention se rapporte à un système de canalisation de la veine de gaz à l'aval d'une turbine, plus particulièrement la turbine haute pression d'un moteur d'avion. Elle s'applique par exemple à un arrière-corps muni d'un élément dit cône d'échappement délimitant la veine intérieurement, entre la sortie de la turbine haute pression et les injecteurs de post-combustion. L'invention concerne plus particulièrement le montage d'un tel cône d'échappement lorsque celui-ci est réalisé en matériau composite, comme par exemple un matériau composite à matrice céramique plus communément connu sous l'abréviation CMC.

Dans la présente description, les termes "amont" et "aval" sont utilisés pour situer un élément de structure par rapport à un autre, en prenant pour référence le sens d'écoulement des gaz.

Dans un turboréacteur d'avion, par exemple, l'arrière-corps, s'étendant radialement intérieurement par rapport à la turbine haute pression et en aval de celle-ci, peut être muni d'un élément de conformation de la veine dit cône d'échappement, s'étendant axialement entre la turbine haute pression et les injecteurs de post-combustion. Cet élément canalise la veine annulaire intérieurement jusqu'aux bras d'injection de la post-combustion. Il est aussi agencé pour lutter contre des vibrations nuisibles (connues sous le nom de "screech" en anglais) grâce à des séries de trous pratiqués dans sa partie aval.

Généralement cet élément est métallique et il comporte, à son extrémité aval une ouverture circulaire dans laquelle est engagée une sorte de couvercle rentrant, également métallique. L'ensemble est avantageusement agencé pour contribuer à atténuer les vibrations mentionnées ci-dessus et notamment à empêcher la formation de phénomènes de résonance.

En fonctionnement, un tel cône d'échappement est porté à des températures élevées et est soumis à un gradient thermique sur la partie amont. Il en résulte des dilatations radiales et axiales, absorbées par la souplesse des différentes pièces assemblées. Le point d'équilibre de ces dilatations conduit à des niveaux de sollicitation élevés qui, en combinaison avec la température élevée, abaissent la durée de vie du cône d'échappement.

Pour augmenter la durée de vie, on a cherché à adapter un cône d'échappement en matériau composite, notamment le CMC. Cette solution est intéressante, non seulement en raison de l'augmentation de durée de vie mais aussi en raison de la réduction de masse obtenue. Cependant, le coefficient de dilatation d'un matériau CMC est très inférieur à celui d'un métal, ce qui rend ce type d'assemblage difficile.

EP 0 316 233 concerne un système de canalisation d'une veine de gaz annulaire, à l'aval d'une turbine, du type comportant un élément dit cône d'échappement délimitant ladite veine intérieurement, ledit cône d'échappement étant monté de façon que son axe de symétrie coïncide avec celui de ladite veine, ledit cône d'échappement étant en matériau composite, monté dans le prolongement d'une virole d'adaptation et maintenu au moins en partie par des moyens de sollicitation élastique s'exerçant axialement sur ledit cône d'échappement en direction de ladite virole d'adaptation.

Selon l'invention ledit cône d'échappement comporte une ouverture circulaire aval, coaxiale, et les moyens de sollicitation élastique comprennent un support solidaire de ladite virole d'adaptation comportant une tige axiale dont l'extrémité aval est assemblée à un élément élastiquement déformable axialement présentant un crochet annulaire prenant appui sur un bord de ladite ouverture circulaire.

Par exemple, ladite extrémité aval de ladite tige axiale est pourvue d'une portion filetée sur laquelle est vissé un écrou de réglage coopérant avec une partie centrale de l'élément élastiquement déformable. On peut ainsi régler la sollicitation axiale appliquée audit cône d'échappement.

Ainsi, les dilatations radiales sont compensées par la création d'un jeu radial (à froid) entre le diamètre intérieur du cône d'échappement (du côté amont) et le diamètre extérieur de la virole d'adaptation. Le jeu radial minimum entre ces diamètres (à froid) correspond au jeu maximum résultant de la différence de dilatation des deux pièces à chaud.

Par ailleurs, la dilatation axiale est reprise par la déformation dudit élément élastiquement déformable. Sa forme permet une forte déformation tout en restant dans le domaine élastique. L'élément est mis en contrainte par le serrage de l'écrou. Le serrage de l'écrou correspond à une valeur de déplacement calculée en fonction de la différence maximum de dilatation axiale entre métal et CMC.

Selon un mode de réalisation avantageux, l'élément élastiquement déformable comporte un disque comprenant un trou central dans lequel est engagée ladite portion filetée et un soufflet périphérique prolongé par ledit crochet annulaire.

L'élément déformable, métallique, constitue donc dans ce cas l'équivalent du couvercle arrière du système connu. Il peut être adapté pour contribuer à lutter contre les vibrations. Pour ce faire, ledit élément élastiquement déformable est complété par un couvercle rentrant comportant une paroi perpendiculaire audit axe, prolongée par une partie cylindrique extérieure qui est assemblée à l'élément élastiquement déformable au voisinage dudit soufflet. Pour lutter contre les vibrations et les phénomènes de résonance possibles, la paroi du disque de l'élément élastiquement déformable et/ou une bande annulaire dudit cône d'échappement, adjacente à ladite partie cylindrique, sont pourvues d'une pluralité de trous.

Du côté amont, l'assemblage du cône et de la virole peut mettre à profit la sollicitation axiale créée et ajustée par l'écrou de réglage. Par exemple, un bord amont dudit cône d'échappement est monté en appui contre une collerette de ladite virole d'adaptation.

Selon une variante, un bord amont dudit cône d'échappement est assemblé à ladite virole d'adaptation par une pluralité de pattes.

Selon encore une autre variante possible, un bord amont dudit cône d'échappement est assemblé à ladite virole d'adaptation par l'intermédiaire d'un soufflet annulaire. Les pattes ou le soufflet sont avantageusement en métal.

L'invention vise aussi toute turbomachine équipée d'un système de canalisation tel que défini ci-dessus.

L'invention sera mieux comprise et d'autres avantages de celle-ci apparaîtront plus clairement à la lumière de la description qui va suivre donnée uniquement à titre d'exemples et faite en référence aux dessins annexés, dans lesquels :
- la figure 1 est une vue partielle en coupe et schématique d'une partie d'un moteur d'avion comprenant un cône d'échappement conforme à l'invention ;
- la figure 2 est une vue partielle en perspective illustrant une variante du cône d'échappement,
- la figure 3 est une vue de détail à plus grande échelle de l'encadré III de la figure 1 ;
- la figure 4 est une vue de détail illustrant une variante de l'assemblage entre le cône d'échappement et une virole d'adaptation ; et
- la figure 5 illustre encore une autre variante de cet assemblage.

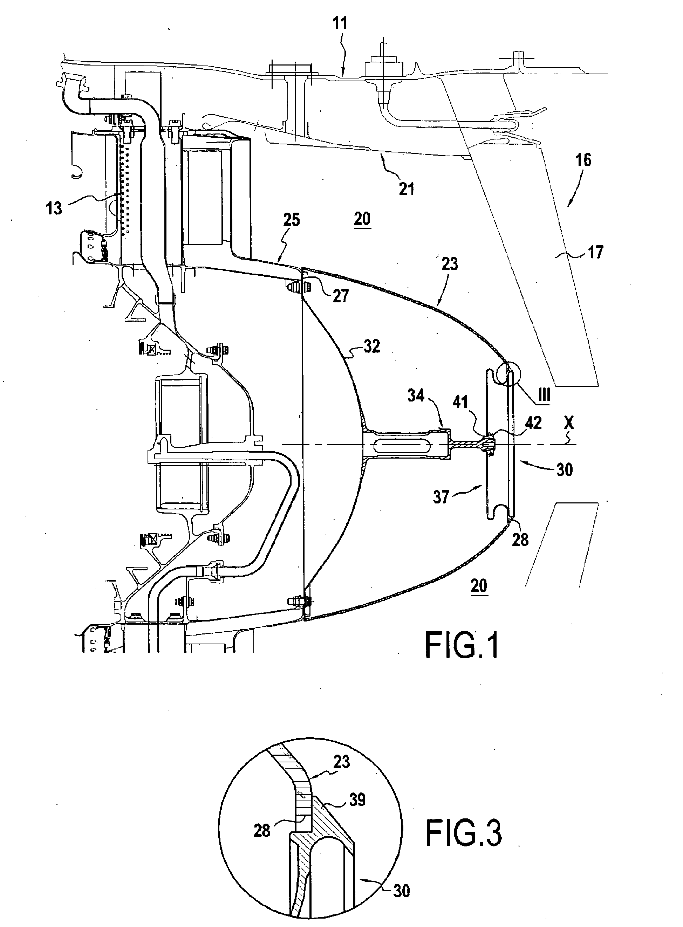

Sur la figure 1, on distingue une partie d'un moteur d'avion comprenant, dans un carter extérieur 11, une turbine haute pression 13 dont le rotor est entraîné en rotation autour d'un axe X et des moyens d'injection de post-combustion 16 agencés à l'aval de la turbine.

Entre la turbine 13 et les bras de post-combustion 17, la veine de gaz 20, annulaire, est délimitée, extérieurement, par des éléments de paroi 21 du carter et, intérieurement, par un élément profilé globalement en forme de dôme, communément appelé cône d'échappement 23. Cet élément est monté de façon que son axe de symétrie coïncide avec celui de la veine 20 qui est aussi l'axe X de la turbine 13. Plusieurs variantes de montage de ce cône d'échappement sont représentées sur les figures 1 à 3.

Selon une caractéristique importante de l'invention, ce cône d'échappement 23 est en matériau composite par exemple un matériau composite renforcé.

Avantageusement, il s'agit d'un matériau composite à matrice céramique dit CMC.

En outre, un bâti fixe 25, qui s'étend radialement à l'intérieur de la turbine et comporte notamment des paliers de l'arbre couplé au rotor de celle-ci, comporte une virole d'adaptation 27 à son extrémité aval. L'axe de cette virole coïncide avec l'axe X. Par virole d'adaptation, on entend tout support périphérique solidaire du bâti fixe 25 auquel est rattachée d'une façon ou d'une autre, l'extrémité amont, à contour circulaire, dudit cône d'échappement.

Le cône d'échappement 23 est monté dans le prolongement de cette virole d'adaptation et est maintenu au moins en partie par des moyens de sollicitation élastique 30 s'exerçant axialement sur ledit cône d'échappement en direction de ladite virole d'adaptation.

Le cône d'échappement 23 comporte ici une ouverture circulaire aval 28, coaxiale et, dans les exemples décrits, lesdits moyens de sollicitation élastique 30 comprennent un support 32 solidaire de la virole d'adaptation 27 (par exemple, ici, d'un seul tenant avec elle) comportant une tige axiale 34 dont l'extrémité aval est assemblée à un élément élastiquement déformable axialement 37.

Cet élément présente ici un crochet annulaire 39 prenant appui sur un bord de l'ouverture circulaire 28.

Plus précisément, ladite extrémité aval de la tige est pourvue d'une portion filetée 41 sur laquelle est vissé un écrou de réglage 42 coopérant avec une partie centrale de l'élément élastiquement déformable 37, par l'intermédiaire d'une rondelle de serrage 43 et d'une bague de coulissement 44. Par conséquent, en vissant l'écrou 42 sur ladite portion filetée 41, on peut obtenir un réglage de la sollicitation axiale appliquée au cône 23 dont le bord opposé repose sur ladite virole d'adaptation 27.

Plus précisément, l'élément élastiquement déformable 37 comporte, ici, un disque 46 pourvu d'un trou central 47 dans lequel est engagée ladite portion filetée 41 et la bague de coulissement 44. Il comporte aussi un soufflet périphérique 50 prolongé par ledit crochet annulaire 39. Le soufflet périphérique 50 assure l'essentiel de la déformation élastique dudit élément élastiquement déformable.

Tous les éléments qui jouxtent et/ou coopèrent avec le cône d'échappement sont métalliques.

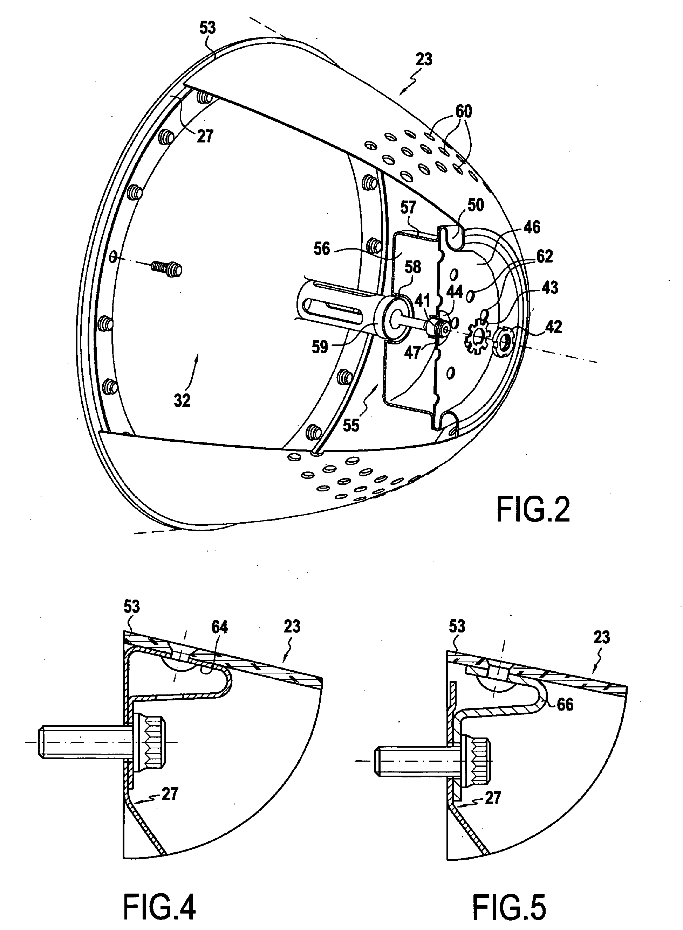

Dans l'exemple des figures 1 et 2, le bord amont 53 du cône d'échappement 23 est simplement monté en appui contre une collerette extérieure de ladite virole d'adaptation 27. Le jeu minimum radial entre le diamètre (à froid) de cette collerette et le diamètre du bord amont du cône d'échappement correspond au jeu maximum résultant de la différence de dilatation des deux pièces à température de fonctionnement.

Dans l'exemple de la figure 2, l'élément élastiquement déformable 37 est complété par ou forme un couvercle rentrant 55. Celui-ci comporte une paroi intérieure 56 perpendiculaire à l'axe X, en forme de disque et une partie cylindrique 57 coaxiale. Cette dernière est assemblée à l'élément élastiquement déformable au voisinage du soufflet 50. La paroi intérieure 56 comporte un manchon 58 coaxial qui coulisse le long d'un tronçon 59, de diamètre correspondant, de la tige axiale 34.

Une bande annulaire du cône d'échappement, adjacente à ladite partie cylindrique 57 du couvercle rentrant, est pourvue d'une pluralité de trous 60. Avantageusement, le disque 46 de l'élément élastiquement déformable qui s'étend entre l'écrou de réglage 42 et le soufflet 50 est également pourvu d'une pluralité de trous 62.

Cet agencement permet de limiter les vibrations et résonances connues sous le nom de "screech".

La figure 4 illustre une variante d'assemblage entre le bord amont 53 du cône d'échappement 23 et la virole d'adaptation. Celle-ci comporte des pattes 64 déformables sous l'effet des variations de température. Dans l'exemple, les pattes sont constituées par des prolongements radiaux de la virole d'adaptation 27, repliées sous les boulons de montage de celle-ci. La partie d'extrémité amont du cône d'échappement 23 est sertie à ces pattes.

Dans la variante de la figure 5, le bord amont 53 du cône d'échappement 53 est assemblé à la virole d'adaptation 27 par l'intermédiaire d'un soufflet annulaire 66 déformable sous l'effet des variations de température.

## Revendications

1. Système de canalisation d'une veine de gaz annulaire, à l'aval d'une turbine, du type comportant un élément dit cône d'échappement (23) délimitant ladite veine (20) intérieurement, ledit cône d'échappement étant monté de façon que son axe de symétrie coïncide avec celui de ladite veine, dans lequel ledit cône d'échappement (23) est en matériau composite, est monté dans le prolongement d'une virole d'adaptation (27) et est maintenu au moins en partie par des moyens de sollicitation élastique (30) s'exerçant axialement sur ledit cône d'échappement en direction de ladite virole d'adaptation, **caractérisé en ce que** ledit cône d'échappement comporte une ouverture circulaire aval (28), coaxiale, **en ce que** lesdits moyens de sollicitation élastique (30) comprennent un support solidaire de ladite virole d'adaptation, comportant une tige axiale (34) dont l'extrémité aval est assemblée à un élément élastiquement déformable (37) axialement, présentant un crochet annulaire (39) prenant appui sur un bord de ladite ouverture circulaire.

2. Système selon la revendication 1, **caractérisé en ce que** ladite extrémité aval de ladite tige axiale est pourvue d'une portion filetée (41) sur laquelle est vissé un écrou de réglage (42) coopérant avec une partie centrale dudit élément élastiquement déformable, pour le réglage de la sollicitation axiale appliquée audit cône.

3. Système selon la revendication 2, **caractérisé en ce que** ledit élément élastiquement déformable comporte un disque (46) comprenant un trou central dans lequel est engagée ladite portion filetée et un soufflet périphérique (50) prolongé par ledit crochet annulaire (39).

4. Système selon l'une des revendications 1 à 3, **caractérisé en ce que** ledit élément élastiquement déformable (37) est métallique.

5. Système selon la revendication 4, **caractérisé en ce qu'**un couvercle rentrant comportant une paroi (56) perpendiculaire audit axe et prolongée par une partie cylindrique (57) est assemblé audit élément élastiquement déformable au voisinage dudit soufflet, une bande annulaire dudit cône d'échappement, adjacente à ladite partie cylindrique, étant pourvue d'une pluralité de trous (60).

6. Système selon la revendication 4 ou 5, **caractérisé en ce qu'**une paroi dudit élément élastiquement déformable est percée de trous (62).

7. Système selon l'une des revendications précédentes, **caractérisé en ce qu'**un bord amont (53) dudit cône d'échappement est monté en appui contre une collerette de ladite virole d'adaptation (27).

8. Système selon l'une des revendications 1 à 7, **caractérisé en ce qu'**un bord amont dudit cône d'échappement est assemblé à ladite virole d'adaptation par une pluralité de pattes (64).

9. Système selon l'une des revendications 1 à 7, **caractérisé en ce qu'**un bord amont dudit cône d'échappement est assemblé à ladite virole d'adaptation par l'intermédiaire d'un soufflet annulaire (66).

10. Turbomachine **caractérisée en ce qu'**elle est équipée d'un système de canalisation selon l'une des revendications précédentes.

## Claims

1. A channeling system for channeling an annular gas stream downstream from a turbine, the system being of the type comprising a so-called "exhaust cone" element (23) defining the inside of said stream (20), said exhaust cone being mounted in such a manner that its axis of symmetry coincides with that of said stream, in which said exhaust cone (23) is made of composite material, is mounted to extend an adapter ring (27), and is held at least in part by elastic stress means (30) acting axially on said exhaust cone, urging it towards said adapter ring, the system being **characterized in that** said exhaust cone includes a circular downstream opening (28) centered on the axis, and **in that** said elastic stress means (30) comprise a support secured to said adapter ring, including an axial rod (34) having its downstream end assembled to an elastically deformable element (37) that can be deformed axially, presenting an annular hook (39) bearing against an edge of said circular opening.

2. A system according to claim 1, **characterized in that** said downstream end of said axial rod is provided with a threaded portion (41) having an adjustment nut (42) screwed thereon to co-operate with a central portion of said elastically deformable element in order to adjust the axial stress applied to said cone.

3. A system according to claim 2, **characterized in that** said elastically deformable element includes a disk (46) with a central hole in which said threaded portion is engaged, and a peripheral bellows (50) extended by said annular hook (39).

4. A system according to any one of claims 1 to 3, **characterized in that** said elastically deformable element (37) is made of metal.

5. A system according to claim 4, **characterized in that** a reentrant cover having a wall (56) perpendicular to said axis and extended by a cylindrical portion (57) is assembled to said elastically deformable element in the vicinity of said bellows, an annular band of said exhaust cone adjacent to said cylindrical portion being provided with a plurality of holes (60).

6. A system according to claim 4 or claim 5, **characterized in that** a wall of said elastically deformable element is pierced by holes (62).

7. A system according to any preceding claim, **characterized in that** an upstream edge (53) of said exhaust cone is mounted to bear against a collar of said adapter ring (27).

8. A system according to any one of claims 1 to 7, **characterized in that** an upstream edge of said exhaust cone is assembled to said adapter ring by a plurality of tabs (64).

9. A system according to any one of claims 1 to 7, **characterized in that** an upstream edge of said exhaust cone is assembled to said adapter ring via an annular bellows (66).

10. A turbomachine, **characterized in that** it is fitted with a channeling system according to any preceding claim.

## Patentansprüche

1. System zum Lenken eines ringförmigen Gasstroms stromabwärts einer Turbine, von der Art umfassend ein als Austrittskonus (23) bezeichnetes Element, das den Strom (20) innen begrenzt, wobei der Austrittskonus derart angebracht ist, daß seine Symmetrieachse mit derjenigen des Stroms zusammenfällt, wobei der Austrittskonus (23) aus Verbundwerkstoff besteht, in der Verlängerung eines Adapterrings (27) angebracht und wenigstens teilweise durch Mittel zum elastischen Beaufschlagen (30) gehalten ist, die in Richtung des Adapterrings axial auf den Austrittskonus wirken, **dadurch gekennzeichnet, daß** der Austrittskonus eine stromabwärtige koaxiale kreisförmige Öffnung (28) aufweist, daß die Mittel zum elastischen Beaufschlagen (30) einen mit dem Adapterring fest verbundenen Träger umfassen, der einen axialen Schaft (34) aufweist, dessen stromabwärtiges Ende mit einem axial elastisch verformbaren Element (37) verbunden ist, das einen ringförmigen Haken (39) aufweist, der an einem Rand der kreisförmigen Öffnung in Anlage ist.

2. System nach Anspruch 1, **dadurch gekennzeichnet, daß** das stromabwärtige Ende des axialen Schaftes mit einem Gewindeabschnitt (41) versehen ist, an dem eine Einstellschraube (42) festgeschraubt ist, die für die Einstellung der an den Konus angelegten axialen Spannung mit einem mittleren Teil des elastisch verformbaren Elements zusammenwirkt.

3. System nach Anspruch 2, **dadurch gekennzeichnet, daß** das elastisch verformbare Element eine Scheibe (46) umfaßt, die ein mittleres Loch, in das der Gewindeabschnitt eingesteckt ist, sowie eine Umfangsmanschette (50) aufweist, welche durch den ringförmigen Haken (39) fortgesetzt ist.

4. System nach einem der Ansprüche 1 bis 3, **dadurch gekennzeichnet, daß** das elastisch verformbare Elemente (37) aus Metall besteht.

5. System nach Anspruch 4, **dadurch gekennzeichnet, daß** ein zurückspringender Deckel, welcher eine zur Achse senkrechte und durch einen zylindrischen Teil (57) fortgesetzte Wand (56) aufweist, mit dem elastisch verformbaren Element in der Nähe der Manschette verbunden ist, wobei ein dem zylindrischen Teil benachbarter ringförmiger Streifen des Austrittskonus mit einer Vielzahl von Löchern (60) versehen ist.

6. System nach Anspruch 4 oder 5, **dadurch gekennzeichnet, daß** eine Wand des elastisch verformbaren Elements mit Löchern (62) versehen ist.

7. System nach einem der vorhergehenden Ansprüche, **dadurch gekennzeichnet, daß** ein stromaufwärtiger Rand (53) des Austrittskonus in Anlage an einem Kragen des Adapterrings (27) angebracht ist.

8. System nach einem der Ansprüche 1 bis 7, **dadurch gekennzeichnet, daß** ein stromaufwärtiger Rand des Austrittskonus durch eine Vielzahl von Laschen (64) mit dem Adapterring verbunden ist.

9. System nach einem der Ansprüche 1 bis 7, **dadurch gekennzeichnet, daß** ein stromaufwärtiger Rand des Austrittskonus mittels einer ringförmigen Manschette (66) mit dem Adapterring verbunden ist.

10. Turbomaschine, **dadurch gekennzeichnet, daß** sie mit einem Lenksystem nach einem der vorhergehenden Ansprüche ausgestattet ist.
